# EUROPEAN PATENT SPECIFICATION

(11) **EP 3 065 275 B1**
(45) Date of publication and mention of the grant of the patent: **14.08.2019**
(21) Application number: 16158023.8
(22) Date of filing: 01.03.2016
(51) Int. Cl.: H02K 49/10, H02K 16/04, H02K 7/14

(54) **GAS TURBINE ENGINE WITH MAGNETIC GEARBOX**
GASTURBINENMOTOR MIT MAGNETISCHEM GETRIEBE
MOTEUR À TURBINE À GAZ AVEC VITESSES MAGNÉTIQUES

(30) Priority: 05.03.2015 US 201562128790 P
(43) Date of publication of application: 07.09.2016
(73) Proprietor: Rolls-Royce North American Technologies, Inc., Indianapolis, IN 46241 (US)
(72) Inventor: LERG, Bryan H., Carmel, IN 46074 (US); BLACKWELDER, Mark J., Plainfield, IN 46168 (US); ARMSTRONG, Michael J., Avon, IN 46123 (US)
(74) Representative: Hoefer & Partner Patentanwälte mbB

(56) References cited:
- EP-A2- 1 931 015
- EP-A2- 1 936 238
- WO-A2-02/49188

## Description

### FIELD OF THE DISCLOSURE

The present disclosure relates generally to gas turbine engines, and more specifically to gas turbine engines that include a magnetic gearbox.

### BACKGROUND

Mechanical gearboxes are typically used as torque transfer devices in various power generators (e.g., wind turbine generators, natural gas generators, etc.) and vehicular applications (e.g., motor vehicles, watercraft, aircraft, etc.). Generally, the components in mechanical gearboxes include gears, with each of the gears having teeth to mesh with other gears in order to transfer rotational motion across shafts. Mechanical gearboxes often require visual inspection, access for maintenance, and a lubrication system. Lubrication systems generally require a tank and an array of strategically placed hoses for transferring the lubricant from the tank, through the array of hoses, to the contact surfaces, which require additional space, thus making such systems difficult to employ in some applications having a tight space tolerance.

Other challenges arising from mechanical gearbox design may include weight, noise, and friction across the gear teeth. The frictional shear stress across the gear teeth may result in surface pitting, wear, shearing, slipping, and damaged teeth, any of which may result in a gear tooth breaking off. The broken off gear tooth, particularly at a high rate of speed (e.g., an over-torque condition), could cause damage both inside and out of the gearbox housing. For example, in an aircraft application, a broken tooth could force the aircraft to have to make an emergency landing. Document EP 1 936 238 A2 discloses a gas turbine comprising a gas generator, a power turbine and a magnetic gearbox.

### SUMMARY

The present disclosure may comprise one or more of the following features and combinations thereof.

In one aspect of the present disclosure, a magnetic gearbox for use in a gas turbine engine may include a stator assembly, an outer rotor assembly, and an inner rotor assembly. The stator assembly may be arranged around a central axis. The stator assembly may include a plurality of stator poles. The inner rotor assembly may be located radially inward of the stator assembly and mounted for rotation relative to the stator assembly about the central axis. The inner rotor assembly may include an inner rotor and a first plurality of permanent magnets coupled to the inner rotor. The outer rotor assembly may be located radially outward of the stator assembly and mounted for rotation relative to the stator assembly about the central axis. The outer rotor assembly may include an outer rotor and a second plurality of permanent magnets coupled to the outer rotor. The inner rotor of the inner rotor assembly may be formed to include a first plurality of slots that each receive an attachment portion of one of the first plurality of permanent magnets coupled to the inner rotor so that the first plurality of permanent magnets coupled to the inner rotor are held in place relative to the inner rotor during rotation of the inner rotor assembly.

In some embodiments, each permanent magnet coupled to the inner and outer rotors may include a body portion. The body portion may be located outside of the plurality of slots and arranged in radially confronting relation with the stator assembly without a retaining wrap therebetween.

In some embodiments, an abradable magnetic coating may be applied to at least one of a radially outer surface of the first plurality of permanent magnets coupled to the inner rotor and a radially inner surface of the second plurality of permanent magnets coupled to the outer rotor.

In some embodiments, the attachment portion of each permanent magnet received in one of the plurality of slots may include one of a fir tree shape, a dovetail shape, and a saddle shape sized.

In some embodiments, each slot formed in the inner and outer rotors may have a shape corresponding to the shape of the attachment portion of the permanent magnet received in the slot so that the attachment portion of the first plurality of permanent magnets engages the inner rotor and the attachment portion of the second plurality of permanent magnets engages the outer rotor.

In some embodiments, each of the plurality of slots formed in the inner rotor of the inner rotor assembly may extend axially through the inner rotor.

In some embodiments, the plurality of stator poles may be spaced and arranged circumferentially apart from one another around the central axis.

In some embodiments, the stator assembly may further include a plurality of windings. Each of the plurality of windings may be wrapped around each of the plurality of stator poles so that the magnetic gearbox provides a generator.

In some embodiments, the outer rotor of the outer rotor assembly may be formed to include a second plurality of slots that each receive an attachment portion of one of the second plurality of permanent magnets coupled to the outer rotor so that the second plurality of permanent magnets coupled to the outer rotor are held in place relative to the outer rotor during rotation of the outer rotor assembly.

In some embodiments, the attachment portion of each permanent magnet coupled to the outer rotor received in one of the second plurality of slots formed in the outer rotor may have one of a fir tree shape, a dovetail shape, and a saddle shape. Each slot formed in the outer rotor may have a shape corresponding to the shape of the attachment portion of the permanent magnet received in the slot so that the attachment portion of the second plurality of permanent magnets engages the outer rotor to generally secure the second plurality of permanent magnets from moving circumferentially out of the second plurality of slots during rotation of the outer rotor assembly.

According to another aspect of the present disclosure, a magnetic gearbox for use in a gas turbine engine may include a stator assembly, an outer rotor assembly, and an inner rotor assembly. The stator assembly may include a plurality of poles spaced circumferentially apart from one another around a central axis. The outer rotor assembly may be mounted for rotation relative to the stator assembly about the central axis. The outer rotor assembly may include an outer rotor and a plurality of permanent magnets coupled to the outer rotor. The inner rotor assembly may be located radially inward of the stator assembly and mounted for rotation relative to the stator assembly about the central axis. The inner rotor assembly may include an inner rotor and a plurality of permanent magnets coupled to the inner rotor. The inner rotor of the inner rotor assembly may be formed to include a plurality of slots that receive attachment portions of the permanent magnets coupled to the inner rotor.

In some embodiments, each of the plurality of slots formed in the inner rotor may be shaped to generally secure an attachment portion included in each of the first plurality of permanent magnets from circumferential movement out of the slot during rotation of the inner rotor assembly.

In some embodiments, the each attachment portion may have one of a fir tree shape, a dovetail shape, and a saddle shape.

In some embodiments, the outer rotor of the outer rotor assembly may be formed to include a plurality of slots that each receives an attachment portion of a permanent magnet coupled to the outer rotor.

In some embodiments, the stator assembly may include a plurality of windings wrapped about the plurality of poles of the stator assembly.

According to still another aspect of the present disclosure, a gas turbine engine may include a gas generator including a compressor, a gas generator turbine, and a combustor, a power turbine, and a magnetic gearbox. The gas generator turbine may be coupled to the compressor to drive rotation of the compressor. The combustor may be arranged between the compressor and the gas generator turbine. The power turbine may be arranged aft of the gas generator turbine along an axis. The magnetic gearbox may be arranged forward of the gas generator turbine along the axis so that the gas generator is arranged axially between the power turbine and the magnetic gearbox. The magnetic gearbox may be coupled to a power turbine shaft that may extend axially aft from the magnetic gearbox to the power turbine and to an output shaft that may extend axially forward from the magnetic gearbox.

In some embodiments, the magnetic gearbox may include a stator assembly, an outer rotor assembly coupled to the output shaft, and an inner rotor assembly coupled to the power turbine shaft.

In some embodiments, the magnetic gearbox may further include a bladed rotor coupled to the output shaft sized to blow air into and around the gas generator.

In some embodiments, the inner rotor assembly of the magnetic gearbox may include an inner rotor forming a plurality of slots and a plurality of permanent magnets each having an attachment portion received in a slot formed in the inner rotor to couple the plurality of permanent magnets to the inner rotor.

In some embodiments, the attachment portion of each permanent magnet received in one of the plurality of slots may have one of a fir tree shape, a dovetail shape, and a saddle shape sized to generally secure the plurality of permanent magnets coupled to the inner rotor from moving circumferentially out of the plurality of slots formed in the inner rotor during rotation of the inner rotor assembly.

In some embodiments, the inner rotor assembly of the magnetic gearbox may include an inner rotor forming a first set of slots and a first set of permanent magnets. Each of the first set of permanent magnets may have an attachment portion for being received in a slot of the first set of slots formed in the inner rotor to couple the first set of permanent magnets to the inner rotor. The outer rotor assembly of the magnetic gearbox may include an outer rotor forming a second set of slots and a second set of permanent magnets. Each of the second set of permanent magnets may have an attachment portion for being received in a slot of the second set of slots formed in the outer rotor to couple the second set of permanent magnets to the outer rotor.

In some embodiments, the attachment portion of each of the first and second sets of permanent magnets may have one of a fir tree shape, a dovetail shape, and a saddle shape. The attachment portion of the first set of permanent magnets may be sized to generally secure the first set of permanent magnets coupled to the inner rotor from moving circumferentially out of the first set of slots formed in the inner rotor during rotation of the inner rotor assembly. The attachment portion of the second set of permanent magnets coupled to the outer rotor may be sized to generally secure the second set of permanent magnets from moving circumferentially out of the second set of slots formed in the outer rotor during rotation of the outer rotor assembly.

These and other features of the present disclosure will become more apparent from the following description of the illustrative embodiments.

### BRIEF DESCRIPTION OF THE DRAWINGS

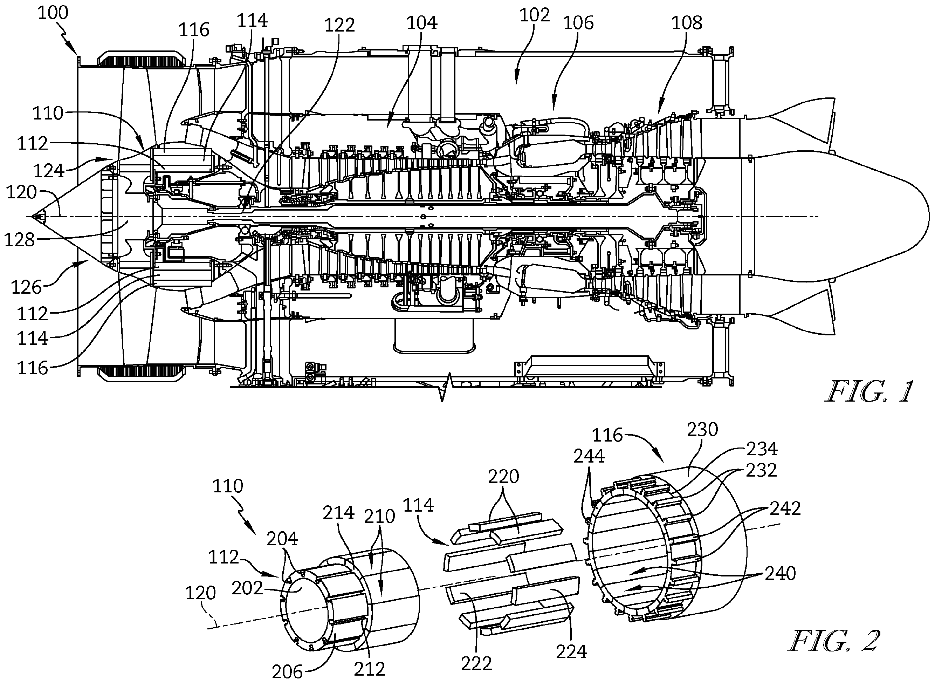

Fig. 1 is a cross-sectional view of a turbofan gas turbine engine showing the arrangement of a magnetic gearbox integrated into the turbofan gas turbine engine arranged forward of a gas generator of a gas turbine engine and aft of a fan showing that the magnetic gearbox includes an inner rotor assembly, a stator assembly, and an outer rotor assembly, and showing the magnetic gearbox is coupled between a power turbine shaft of turbine engine and an output shaft of the fan;
Fig. 2 is an exploded view of an embodiment of the magnetic gearbox of Fig. 1 showing that the magnetic gearbox includes a first set of permanent magnets each having an attachment portion slidably disposed in slots of an exterior surface of an inner rotor of the inner rotor assembly and a second set of permanent magnets each having an attachment portion slidably disposed in slots of an interior surface of an outer rotor of the outer rotor assembly;

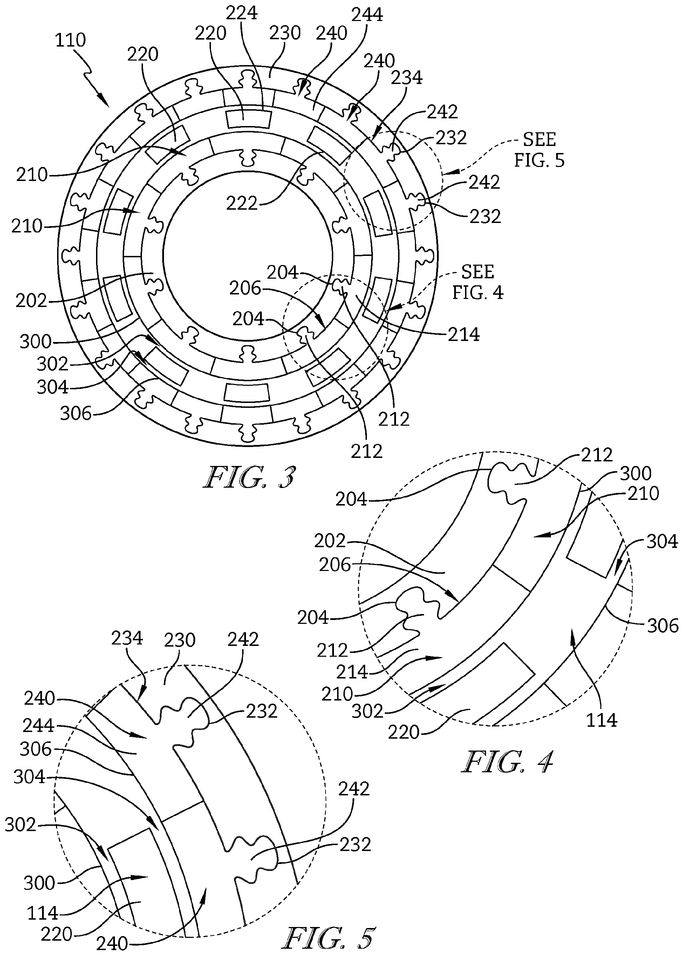

Fig. 3 is a cross-sectional view of the embodiment of the magnetic gearbox of Fig. 1 showing that the magnetic gearbox includes permanent magnets coupled to each of an inner rotor of the inner rotor assembly and an outer rotor of the outer rotor assembly, and showing that each magnet is coupled to a corresponding slot of the inner and outer rotors by an attachment portion of each magnet;

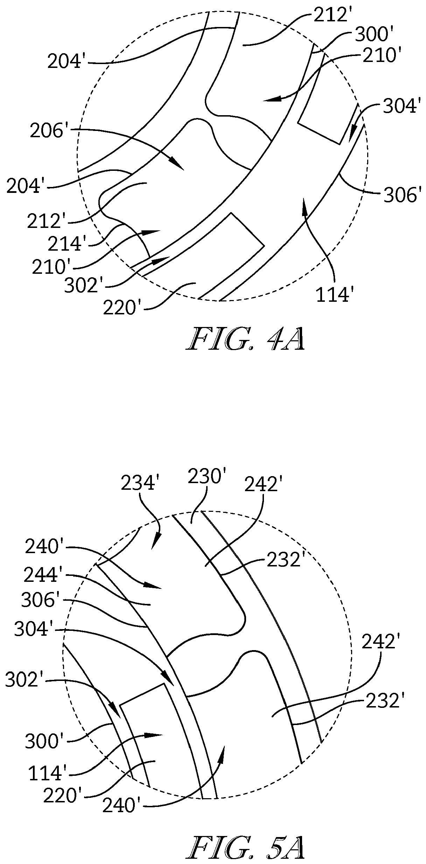

Fig. 4 is a detail view of a portion of Fig. 3 showing a portion of the inner rotor assembly, and showing the attachment portion of the magnets of the inner rotor assembly being coupled to a corresponding slot of the inner rotor of the inner rotor assembly;
Fig. 4A is a view similar to Fig. 4 of an inner rotor assembly showing an alternative embodiment in which the attachment portion of the magnets are integral with the body of the magnets such that substantially all of the magnet body and attachment portion are received in a slot of the inner rotor of the inner rotor assembly;
Fig. 5 is a detail view of a portion of Fig. 3 showing a portion of the outer rotor assembly, and showing the attachment portion of the magnets of the outer rotor assembly being coupled to a corresponding slot of the outer rotor of the outer rotor assembly;
Fig. 5A is a view similar to Fig. 5 of an outer rotor assembly showing an alternative embodiment in which the attachment portion of the magnets are integral with the body of the magnets such that substantially all of the magnet body and attachment portion are received in a slot of the outer rotor of the outer rotor assembly; and

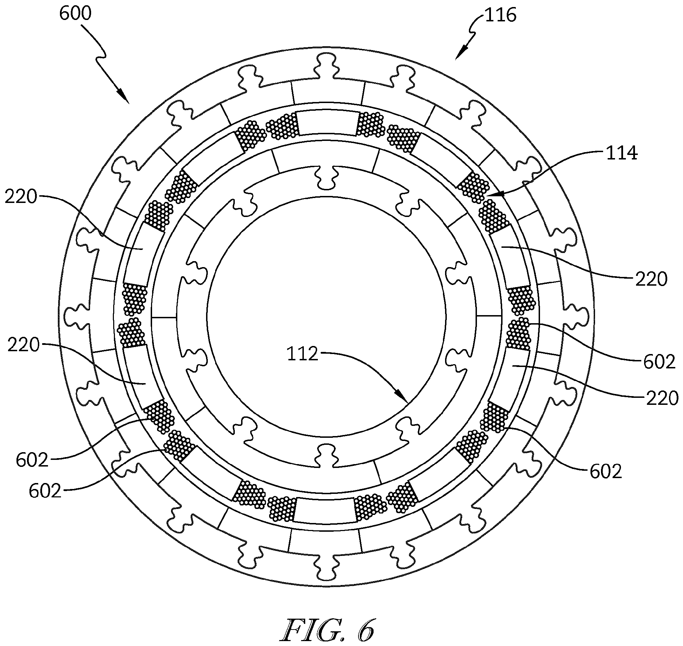

Fig. 6 is a cross-sectional view of another embodiment of the magnetic gearbox of Fig. 3 showing that the magnetic gearbox further includes conductor windings around each stator pole of the stator assembly to provide an integrated generator.

### DETAILED DESCRIPTION OF THE DRAWINGS

For the purposes of promoting an understanding of the principles of the disclosure, reference will now be made to a number of illustrative embodiments illustrated in the drawings and specific language will be used to describe the same.

An illustrative turbofan engine 100 cross-sectional for use in an aircraft application is shown, for example, in Fig. 1. The turbofan engine 100 may include a gas turbine engine 102, a magnetic gearbox 110, and a fan 124 (i.e., a bladed rotor). The gas turbine engine 102 may include a compressor 104, a combustor 106, and a turbine 108. The compressor 104 may be used to compress air drawn into the gas turbine engine 102 by the fan 124 and deliver the high pressure air to the combustor 106. In the combustor 106, fuel is mixed with the high pressure air and is ignited, the products of which are directed into the turbine 108 where work is extracted to drive the compressor 104 and, sometimes, a power turbine shaft 122. The power turbine shaft 122 may be driven by the gas turbine engine 102 for powering the fan 124 through the magnetic gearbox 110.

The magnetic gearbox 110 transfers torque using non-contact magnetic coupling, unlike the contact of gear teeth of mechanical gearboxes as suggested in Fig. 3. As such, the magnetic gearbox, due to transferring torque without contact, does not suffer from some deficiencies typically associated with mechanical gearboxes. The magnetic gearbox 110 is illustratively arranged in an axial configuration about a central axis 120 of the engine 102 and housed generally within a nose cone 126 of the turbofan engine 100, as shown in FIG. 1. The magnetic gearbox 110 may include an inner rotor assembly 112, a stator assembly 114, and an outer rotor assembly 116, each of which are described in further detail in Fig. 2 below.

The power turbine shaft 122 of the gas turbine engine 102 may extend axially forward from the turbine 108 through the combustor 106 and the compressor 104 to then be coupled to the inner rotor assembly 112 of the magnetic gearbox 110, as shown in FIG. 1. An output shaft 128 extends axially forward from the magnetic gearbox. The output shaft 128 may be coupled to the fan 124, which may be coupled to the outer rotor assembly 116 of the magnetic gearbox 110 to rotate the fan 124. In certain embodiments, the power turbine shaft 122 and/or the output shaft 128 may be comprised of more than one concentric shaft. In some embodiments, the power turbine shaft 122 and/or the output shaft 128 may be configured to allow for bidirectional movement.

The embodiments illustrated in Figs. 2 and 3 of the magnetic gearbox 110 are shown to illustrate that: (i) the inner rotor assembly 112 may include an inner rotor 202 and a first set of permanent magnets 210; (ii) the stator assembly 114 may include stator poles 220; and (iii) the outer rotor assembly 116 may include a second set of permanent magnets 240 and an outer rotor 230. The first set of permanent magnets 210 may be attached to the inner rotor 202 to produce a spatially variable first magnetic field. The second set of permanent magnets 240 may be attached to the outer rotor 230. The stator poles 220 may be stationary and positioned between the first set of permanent magnets 210 and the second set of permanent magnets 240 to interfere with the first magnetic field. Rotation of the inner rotor 202 relative to the stator poles 220 produces a second magnetic field which rotates the second set of permanent magnets 240.

It is contemplated that the magnetic gearbox 110 may be incorporated into other applications within the turbofan engine 100 and/or other gas turbine engines. For example, the magnetic gearbox 110 may be employed along accessory gearbox drive trains, output shafting, or the like. Further, the magnetic gearboxes described herein may be applied along other types of drive trains outside of gas turbine engine applications.

Referring now to Fig. 2, an exploded view of the magnetic gearbox 110 is shown to illustrate the attachment of each set of permanent magnets 210, 240 to each of the rotors 202, 230 so that the permanent magnets 210, 240 can be retained by each of the rotors 202, 230. Each of the first set of permanent magnets 210 may include a body portion 214 and an attachment portion 212 shaped such that the attachment portion 212 of each of the first set of permanent magnets 210 may be slidably disposed into slots 204 of an exterior surface 206 of the inner rotor 202, which are illustrated in further detail in FIGS. 3 and 4. Each of the second set of permanent magnets 240 may include a body portion 244 and an attachment portion 242 shaped such that the attachment portion 242 of each of the second set of permanent magnets 240 may be slidably disposed into slots 232 of an interior surface 234 of the outer rotor 230, which are illustrated in further detail in FIGS. 3 and 5. In order to preserve clarity, only a few of the first and second sets of permanent magnets 210, 240, slots 204, 232, stator poles 220, and other such multiply illustrated features have been specifically designated by reference numerals in the illustrated embodiment.

Referring now to Fig. 3, a cross-sectional view of the embodiment of the magnetic gearbox 110 is shown. Similar to Fig. 2, the magnetic gearbox 110 in Fig. 3 illustrates how each set of permanent magnets 210, 240 are attached to each of the rotors 202, 230 to secure each set of permanent magnets 210, 240 to the rotors 202, 230. The torque density of the magnetic gearbox 110 is directly related to an air gap distance between the permanent magnets 210, 240 attached to each of the rotors 202, 230 and the stator poles 220 of the stator assembly 114. Prior art magnetic gearboxes use prior art surface attachment methods including composite wraps, clamps, and/or retention bolt structures. Such prior art surface attachment methods may be insufficient to retain the permanent magnets 210, 240 to the rotors 202, 230 and/or maintain an optimal air gap distance in certain applications where the rotors are subjected to high shear torque, such as in the turbofan engine 100 of FIG. 1, for example.

A first air gap 302 is shown between an outer surface 300 of the body portion 214 of the first set of permanent magnets 210 of the inner rotor assembly 112 and an inner surface 222 of the stator poles 220 of the stator assembly 114. A second air gap 304 is shown between an outer surface 224 of the stator poles 220 of the stator assembly 114 and an inner surface 306 of the body portion 244 of the second set of permanent magnets 240 of the outer rotor assembly 116. Magnetic flux passing through the first and second air gaps 302, 304 transmits power between the inner rotor assembly 112 and the outer rotor assembly 116 to rotate the power turbine shaft 122 and/or the output shaft 128. As illustrated, the inner rotor assembly 112, also commonly referred to as a low-speed rotor assembly, may rotate with a low speed and high torque, while the outer rotor assembly 116, also commonly referred to as a high speed rotor assembly, may rotate with a high speed and low torque.

Generally, reducing the air gaps 302, 304 results in an improved performance level. The attachment portion 212, 242 of each set of permanent magnets 210, 240 may be sized to generally secure the first and second sets of permanent magnets 210, 240 to the correspondingly shaped slots 204, 232 of the rotors 202, 230 to reduce the air gaps 302, 304. By securing the permanent magnets 210, 240 along the rotors 202, 230, rather than the exterior surface 206 of the inner rotor 202 and the interior surface 234 of the outer rotor 230, the size, or distance, of the air gaps 302, 304 may be reduced.

When torque (i.e., rotation) is being transferred across the rotors 202, 230, the permanent magnets 210, 240 have outward (i.e., centrifugal) and tangential (i.e., circumferential) forces being applied to them. As the rotors 202, 230 increase in size, so too do the forces being applied. As such, surface attachments, such as composite wraps, clamps, or retention bolt structures, may not be sufficient in certain applications to prevent motion of the permanent magnets 210, 240 transverse to the insertion direction that is radially outward from the central axis 120 of the gas turbine engine 102.

In some embodiments, the attachment portions 212, 242 can have differing breadth and/or width portions so that when the attachment portions 212, 242 are inserted into the correspondingly shaped slots 204, 232 of the rotors 202, 230, the rotors 202, 230 prevent motion of the permanent magnets 210, 240 transverse to the insertion direction that is radially outward from the central axis 120 of the gas turbine engine 102. In other words, the attachment portions 212, 242 of the permanent magnets 210, 240 and the slots 204, 232 of the rotors 202, 230 may be configured such that the permanent magnets 210, 240 do not require any surface attachments to secure the permanent magnets 210, 240 to the rotors 202, 230, even when large outward and tangential forces are being applied.

In the illustrative embodiment, the slots 204, 232 have a relatively wide portion and a relatively narrow portion forming a generally fir tree shape to receive the attachment portions 212, 242 of the permanent magnets 210, 240 to secure the permanent magnets 210, 240 to the corresponding rotors 202, 230. The attachment portions 212, 242 of each set of permanent magnets 210, 240 in the illustrative embodiment have a relatively narrow portion and a relatively wide portion forming a generally fir tree shape to block removal of the permanent magnets 210, 240 from the corresponding slots 204, 232 of the rotors 202, 230 that receive them. The fir tree shape of the illustrative attachment portions 212, 242 has a double-lobed shape in cross-section, although other shapes are contemplated herein. For example, in some embodiments, the attachment portions 212, 242 of each set of permanent magnets 210, 240 may have a dovetail shape generally formed in the shape of a triangle, a saddle shape generally formed in the shape of an overhead view of a saddle, or any shape that can block the removal from and prevent motion of the permanent magnets 210, 240 inserted into the correspondingly shaped slots 204, 232 of the rotors 202, 230.

With reference to Fig. 4, a detailed view of a portion of the inner rotor assembly 112 and the stator assembly 114 is illustrated to show the attachment portion 212 of the first set of permanent magnets 210 being coupled to a corresponding slot of the slots 204 of the inner rotor 202. In certain embodiments, a manufacturing tolerance may affect the clearance between the outer surface 300 of the body portion 214 of the first set of permanent magnets 210 and the inner surface 222 of the stator poles 220 of the stator assembly 114. In such embodiments, an abradable magnetic coating 402 may be applied to provide adequate clearance between the outer surface 300 of the body portion 214 of the first set of permanent magnets 210 and the inner surface 222 of the stator poles 220 during operation of the magnetic gearbox 110.

With reference to Fig. 5, a detailed view of a portion of the outer rotor assembly 116 and the stator assembly 114 is illustrated to show the attachment portion 242 of the second set of permanent magnets 240 being coupled to a corresponding slot of the slots 232 of the outer rotor 230. In certain embodiments, a manufacturing tolerance may affect the clearance between the inner surface 306 of the body portion 244 of the second set of permanent magnets 240 and the outer surface 224 of the stator poles 220 of the stator assembly 114. In such embodiments, an abradable magnetic coating 502 may be applied to provide adequate clearance between the inner surface 306 of the body portion 244 of the second set of permanent magnets 240 and the outer surface 224 of the stator poles 220 during operation of the magnetic gearbox 110.

Figs. 4A and 5A are similar to Figs. 4 and 5 but show an alternative embodiment in which attachment portions 212', 242' of the magnets 210', 240' are integral with the body portions 214', 244' of the magnets 210', 240'. The alternative embodiment is substantially similar to the embodiment shown in Figs. 3-5 and described herein. Accordingly, similar reference numbers in the prime (') series indicate features that are common between the embodiments. The description of the embodiment shown in Figs. 3-5 is hereby incorporated by reference to apply to the alternative embodiment shown in Figs. 4A and 5A, except in instances when it conflicts with the specific description and drawings thereof.

Illustratively, the attachment portions 212', 242' and the body portions 214', 242' of the magnets 210', 240' shown in Figs. 4A and 5A cooperate to provide a dovetail shape. Both attachment portions 212', 242' and the body portions 214', 242' of the magnets 210', 240' are received in corresponding slots 204', 232' such that substantially all of the magnet body portions 214', 244' and attachment portions 212', 242' are received in slots 204', 232'. As suggested by the alternative embodiment in Figs. 4A and 5A, the magnets 210', 241' may take other shapes adapted to couple with slots and still fall within the scope of the present disclosure.

The magnetic gearbox 110 may include windings 602 around each stator pole 220 of the stator assembly 114 to provide an integrated generator embodiment 600 as shown in Fig. 6. The windings 602 may transduce a changing second magnetic field produced by the rotation of the second set of permanent magnets 240 into an electrical voltage. The integrated generator embodiment 600 allows for the generation of electricity and the functionality of the magnetic gearbox 110 to co-exist in a single machine, reducing the need in certain applications for an external power generator. Such an embodiment may allow for a dialed torque control of the output shaft 128. Adjusting the power draw from the windings 602 may result in a fine tuning capability for control of the gas turbine engine 102, as well as torque measurement on the turbofan engine 100.

In certain embodiments, the magnetic gearbox 110 may be a fully variable magnetic gearbox (i.e., a continuously variable transmission (CVT)). While such an embodiment would likely introduce additional cost, weight, and complexity, the total system control and power management allow matching on revolutions per minute (RPM) for both the fan 124 and the turbine 108 of the gas turbine engine 102. In some embodiments, the integrated generator embodiment 600 may be combined with the the CVT embodiment. In such embodiments, the turbofan engine 100 RPM and power generation capability are all independent variables that may be optimized through control architecture of the turbofan engine 100.

It should be noted that the inclusion of the magnetic gearbox 110 in place of a conventional mechanical gearbox is not restricted to the turbofan engine 100 embodiment illustrated in Fig. 1. The magnetic gearbox 110 may be included in a turboprop application, where it may be positioned between in a turboprop engine and a conventional propeller, for example. In a power generator application, for example, the magnetic gearbox 110 may be positioned between an electrical generator and an engine of the power generator application.

It should be appreciated that the magnetic gearbox 110 may be placed in additional and/or alternative locations in certain applications, such as the compressor 104 portion of the gas turbine engine 102, for example. It should be further appreciated that, in some embodiments, the magnetic gearbox 110 may be in an alternative configuration to the axial configuration illustrated in Figs. 1-6. Such alternative configurations may include a radial gear configuration and a trans-rotary gear configuration, for example, which may change the behavior and characteristics of the features illustrated herein for the magnetic gearbox 110 in the axial configuration. In a radial gear configuration, in contrast to the axial configuration, the outer rotor 230 may be the low-speed rotor and the inner rotor 202 may be the highspeed rotor.

Mechanical gearboxes are commonly used as torque transfer devices due to their accuracy at speed matching, which results in a realizable engine efficiency. However, mechanical gearboxes require their own lubrication system and, as such, typically require a larger housing. In certain applications, the larger housing may disturb airflow and add additional weight. The magnetic gearbox 110, however, does not require its own lubrication system. In the magnetic gearbox 110, the only components that have contact between the inner rotor assembly 112 and the outer rotor assembly 116 are a set of bearings (not shown). While the bearings require lubrication, a standard engine lube system (not shown) is generally sufficient to provide the necessary lubrication, thus making the magnetic gearbox 110 lighter and more easily placed in locations with a tight space tolerance. Further, the stator assembly 114 of the magnetic gearbox 110 takes a localized loading, rather than gross loads, meaning a housing for the magnetic gearbox 110 would primarily be needed to prevent debris from entering the rotor system.

Each of the first and second sets of permanent magnets 210, 240 alternate between positive and negative magnets, every two alternative magnets forming a pole pair. Typically, there are more permanent magnets in the first set of permanent magnets 210. A gear ratio of the magnetic gearbox 110 is based on the number of pole pairs of the permanent magnets 210, 240, not the size of the magnetic gearbox 110. In other words, high and low gear ratios may be fit into nearly the same size system without requiring multiple gear sets.

In certain applications, over-torque conditions can cause the gear teeth of the mechanical gearbox to become sheared, slipped, or damaged, which can be destructive to the engine components, requiring immediate shutdown and a lengthy repair. A slip condition occurring in an application using the magnetic gearbox 110 will be caught and return to normal operation without incident. In a severe case (e.g., sizeable matter ingestion causing high levels of temporary torque), the engine may need to come offline to re-synchronize the velocities of certain components (e.g., the fan 124 and the turbine 108), but will return to normal operation upon synchronization, as no physical damage will have been done to the magnetic gearbox 110. Additionally, because the magnetic gearbox 110 is not susceptible to gear teeth shearing, the magnetic gearbox 110 may be placed in a limited access location, as the bearings may be the only component needing regular visual inspection.

## Claims

1. A gas turbine engine (102) comprising:
a gas generator including a compressor (104), a gas generator turbine coupled to the compressor (104) to drive rotation of the compressor (104), and a combustor (106) arranged between the compressor (104) and the gas generator turbine,
a power turbine arranged aft of the gas generator turbine along an axis, and
a magnetic gearbox (110) arranged forward of the gas generator turbine along the axis so that the gas generator is arranged axially between the power turbine and the magnetic gearbox (110), the magnetic gearbox (110) being coupled to a power turbine shaft (122) that extends axially aft from the magnetic gearbox (110) to the power turbine and to an output shaft (128) that extends axially forward from the magnetic gearbox (110).

2. The gas turbine engine of claim 1, wherein the magnetic gearbox (110) includes a stator assembly (114), an outer rotor assembly (116) coupled to the output shaft (128), and an inner rotor assembly (112) coupled to the power turbine shaft (112).

3. The gas turbine engine of claim 2, further comprising a bladed rotor coupled to the output shaft (128) sized to blow air into and around the gas generator.

4. The gas turbine engine of any preceding claim, the magnetic gearbox (110) comprising:
a stator assembly (114) including a plurality of stator poles (220) arranged around a central axis (120),
an inner rotor assembly (112) located radially inward of the stator assembly (114) and mounted for rotation relative to the stator assembly (114) about the central axis (120), the inner rotor assembly (112) including an inner rotor (202) and a first plurality of permanent magnets (210) coupled to the inner rotor (202), and
an outer rotor assembly (116) located radially outward of the stator assembly (114) and mounted for rotation relative to the stator assembly (114) about the central axis (120), the outer rotor assembly (116) including an outer rotor (230) and a second plurality of permanent magnets (240) coupled to the outer rotor (230),
wherein the inner rotor (202) of the inner rotor assembly (112) is formed to include a first plurality of slots (204) that each receive an attachment portion (212) of one of the first plurality of permanent magnets (210) coupled to the inner rotor (202) so that the first plurality of permanent magnets (210) coupled to the inner rotor (202) are held in place relative to the inner rotor (202) during rotation of the inner rotor assembly (112).

5. The gas turbine engine of claim 4, wherein each permanent magnet (210, 240) coupled to the inner and outer rotors (202, 230) includes a body portion (214, 244) located outside of the plurality of slots (204, 232) and arranged in radially confronting relation with the stator assembly (114) without a retaining wrap therebetween.

6. The gas turbine engine of claim 4 or 5, wherein an abradable magnetic coating is applied to at least one of a radially outer surface (300) of the first plurality of permanent magnets (210) coupled to the inner rotor (202) and a radially inner surface (306) of the second plurality of permanent magnets (240) coupled to the outer rotor (230).

7. The gas turbine engine of any of claims 4 to 6, wherein the attachment portion (212, 242) of each permanent magnet (210, 240) received in one of the first and second plurality of slots (204, 232) has one of a fir tree shape, a dovetail shape, and a saddle shape.

8. The gas turbine engine of claim 7, wherein each slot (204) formed in the inner rotor (202) has a shape corresponding to the shape of the attachment portion (212) of the first plurality of permanent magnets (210) received in the first plurality of slots (204) so that the attachment portion (212) of the first plurality of permanent magnets (210) engages the inner rotor (202).

9. The gas turbine engine of claim 8, wherein the each of the first plurality of slots (204) formed in the inner rotor (202) of the inner rotor assembly (112) extends axially through the inner rotor (202).

10. The gas turbine engine of any of claims 4 to 9, wherein the plurality of stator poles (220) are spaced and arranged circumferentially apart from one another around the central axis (120).

11. The gas turbine engine of any of claims 4 to 10, wherein the stator assembly (114) further includes a plurality of windings (602), each of the plurality of windings (602) wrapped around each of the plurality of stator poles (220) so that the magnetic gearbox provides a generator.

12. The gas turbine engine of any of claims 4 to 11, wherein the outer rotor (230) of the outer rotor assembly (116) is formed to include a second plurality of slots (232) that each receive an attachment portion (242) of one of the second plurality of permanent magnets (240) coupled to the outer rotor (230) so that the second plurality of permanent magnets (240) coupled to the outer rotor (230) are held in place relative to the outer rotor (230) during rotation of the outer rotor assembly (116).

13. The gas turbine engine of claim 12, wherein the attachment portion (242) of each permanent magnet (240) coupled to the outer rotor (230) received in one of the second plurality of slots (232) formed in the outer rotor (230) has one of a fir tree shape, a dovetail shape, and a saddle shape, and each slot (232) formed in the outer rotor (230) has a shape corresponding to the shape of the attachment portion (242) of the permanent magnet (240) received in the slot (232) so that the attachment portion (242) of the second plurality of permanent magnets (240) engages the outer rotor (230) to generally secure the second plurality of permanent magnets (240) from moving circumferentially out of the second plurality of slots (232) during rotation of the outer rotor assembly (116).

## Patentansprüche

1. Ein Gasturbinentriebwerk (102), umfassend:
- einen Gasgenerator, der einen Verdichter (104) beinhaltet, eine an den Verdichter (104) gekoppelte Gasgeneratorturbine, um den Verdichter (104) in Drehung zu versetzen, und eine zwischen dem Verdichter (104) und der Gasgeneratorturbine angeordnete Brennkammer (106),
- eine hinter der Gasgeneratorturbine entlang einer Achse angebrachte Arbeitsturbine, und
- ein vor der Gasgeneratorturbine entlang der Achse angebrachtes Magnetgetriebe (110), so dass sich der Gasgenerator axial zwischen der Arbeitsturbine und dem Magnetgetriebe (110) befindet, wobei das Magnetgetriebe (110) an eine Arbeitsturbinenwelle (122) gekoppelt ist, die sich axial nach hinten vom Magnetgetriebe (110) zur Arbeitsturbine und zu einer Abtriebswelle (128) erstreckt, die axial nach vorne vom Magnetgetriebe (110) aus verläuft.

2. Das Gasturbinentriebwerk nach Anspruch 1, wobei das Magnetgetriebe (110) eine Statoranordnung (114), eine äußere, an die Abtriebswelle (128) gekoppelte Rotoranordnung (116) und eine innere, an die Arbeitsturbinenwelle (112) gekoppelte Rotoranordnung (112) beinhaltet.

3. Das Gasturbinentriebwerk nach Anspruch 2, weiter umfassend einen an die Abtriebswelle (128) gekoppelten beschaufelten Rotor, der so bemessen ist, dass er Luft in und um den Gasgenerator bläst.

4. Das Gasturbinentriebwerk nach einem der vorangehenden Ansprüche, wobei das Magnetgetriebe (110) umfasst:
• eine Statoranordnung (114), die eine Vielzahl von um eine Mittelachse (120) angeordneten Statorpolen (220) beinhaltet,
• eine innere Rotoranordnung (112), die sich radial innerhalb der Statoranordnung (114) befindet und drehbar gegenüber der Statoranordnung (114) um die Mittelachse (120) gelagert ist, wobei die innere Rotoranordnung (112) einen Innenrotor (202) und eine erste Vielzahl von an den Innenrotor (202) gekoppelten Dauermagneten (210) beinhaltet, und
• eine äußere Rotoranordnung (116), die sich radial außerhalb der Statoranordnung (114) befindet und drehbar gegenüber der Statoranordnung (114) um die Mittelachse gelagert ist, wobei die äußere Rotoranordnung (116) einen Außenrotor (230) und eine zweite Vielzahl von an den Außenrotor (230) gekoppelten Dauermagneten (240) beinhaltet,
wobei der Innenrotor (202) der inneren Rotoranordnung (112) so geformt ist, dass er eine erste Vielzahl von Schlitzen (204) beinhaltet, die jeweils einen Befestigungsbereich (212) von einer der ersten Vielzahl der an den Innenrotor (202) gekoppelten Dauermagnete (210) aufnehmen, so dass die erste Vielzahl der an den Innenrotor (202) gekoppelten Dauermagnete (210) in Position gegenüber dem Innenrotor (202) bei Drehung der inneren Rotoranordnung (112) gehalten wird.

5. Das Gasturbinentriebwerk nach Anspruch 4, wobei jeder an den Innenrotor (202) und den Außenrotor (230) gekoppelte Dauermagnet (210, 240) einen Körperabschnitt (214, 244) beinhaltet, der sich außerhalb der Vielzahl von Schlitzen (204, 232) befindet und radial gegenüberliegend zur Statoranordnung (114) angebracht ist, ohne dass sich ein Haltemittel dazwischen befindet.

6. Das Gasturbinentriebwerk nach Anspruch 4 oder 5, wobei eine magnetische Einlaufschicht an mindestens einer der radial außen liegenden Flächen (300) der ersten Vielzahl der an den Innenrotor (202) gekoppelten Dauermagnete (210) und an einer radial innen liegenden Fläche (306) der zweiten Vielzahl der an den Außenrotor (230) gekoppelten Dauermagnete (240) angebracht ist.

7. Das Gasturbinentriebwerk nach einem der Ansprüche 4 bis 6, wobei der Befestigungsbereich (212, 242) eines jeden Dauermagneten (210, 240), der von einer der ersten und zweiten Vielzahl von Schlitzen (204, 232) aufgenommen wird, die Form eines Tannenbaums, eines Schwalbenschwanzes oder eines Sattels aufweist.

8. Das Gasturbinentriebwerk nach Anspruch 7, wobei jeder im Innenrotor (202) ausgeformte Schlitz (204) eine Form aufweist, die der Form des in der ersten Vielzahl von Schlitzen (204) aufgenommenen Befestigungsbereichs (212) der ersten Vielzahl von Dauermagneten (210) entspricht, so dass der Befestigungsbereich (212) der ersten Vielzahl von Dauermagneten (210) in den Innenrotor (202) greift.

9. Das Gasturbinentriebwerk nach Anspruch 8, wobei jeder im Innenrotor (202) der inneren Rotoranordnung (112) ausgeformte Schlitz aus der ersten Vielzahl von Schlitzen (204) axial durch den Innenrotor (202) verläuft.

10. Das Gasturbinentriebwerk nach einem der Ansprüche 4 bis 9, wobei die Vielzahl der Statorpole (220) beabstandet und umfangsmäßig voneinander entfernt um die Mittelachse (120) angeordnet sind.

11. Das Gasturbinentriebwerk nach einem der Ansprüche 4 bis 10, wobei die Statoranordnung (114) desweiteren eine Vielzahl von Windungen (602) beinhaltet, und jede der Vielzahl der Windungen (602) um jede der Vielzahl der Statorpole (220) gewickelt ist, so dass das Magnetgetriebe einen Generator bildet.

12. Das Gasturbinentriebwerk nach einem der Ansprüche 4 bis 11, wobei der Außenrotor (230) der äußeren Rotoranordnung (116) so geformt ist, dass er eine zweite Vielzahl von Schlitzen (232) beinhaltet, die jeweils einen Befestigungsbereich (242) von einer der zweiten Vielzahl der an den Außenrotor (230) gekoppelten Dauermagnete (240) aufnehmen, so dass die zweite Vielzahl der an den Außenrotor (230) gekoppelten Dauermagnete (240) in Position gegenüber dem Außenrotor (230) bei Drehung der äußeren Rotoranordnung (116) gehalten wird.

13. Das Gasturbinentriebwerk nach Anspruch 12, wobei der Befestigungsbereich (242) eines jeden an den Außenrotor (230) gekoppelten Dauermagneten (240), der von einer der zweiten am Außenrotor (230) ausgebildeten Vielzahl von Schlitzen (232) aufgenommen wird, die Form eines Tannenbaums, eines Schwalbenschwanzes oder eines Sattels aufweist, und jeder im Außenrotor (230) ausgeformte Schlitz (232) eine Form aufweist, die der Form des im Schlitz (232) aufgenommenen Befestigungsbereichs (242) des Dauermagneten (240) entspricht, so dass der Befestigungsbereich (242) der zweiten Vielzahl von Dauermagneten (240) in den Außenrotor (230) greift, um allgemein gesprochen, die zweite Vielzahl von Dauermagneten (240) daran zu hindern, bei Drehung der äußeren Rotoranordnung (116) sich in Umfangsrichtung aus der zweiten Vielzahl der Schlitze (232) heraus zu bewegen.

## Revendications

1. Un moteur à turbine à gaz (102) comprenant:
- un générateur de gaz incluant un compresseur (104), une turbine de générateur de gaz accouplée au compresseur (104) pour faire tourner le compresseur (104) et une chambre de combustion (106) disposée entre le compresseur (104) et la turbine de générateur de gaz,
- une turbine de travail disposée en aval de la turbine de générateur de gaz le long d'un axe, et
- un engrenage magnétique (110) disposé en amont de la turbine de générateur de gaz le long de l'axe de sorte que le générateur de gaz est disposé axialement entre la turbine de travail et l'engrenage magnétique (110), sachant que l'engrenage magnétique (110) est accouplé à un arbre de la turbine de travail (122) qui s'étend axialement à l'arrière de l'engrenage magnétique (110) vers la turbine de travail et vers un arbre de sortie (128) qui s'étend axialement vers l'avant de l'engrenage magnétique (110).

2. Le moteur à turbine à gaz selon la revendication n° 1, sachant que l'engrenage magnétique (110) inclut un ensemble stator (114), un ensemble rotor extérieur (116) accouplé à l'arbre de sortie (128) et un ensemble rotor intérieur (112) accouplé à l'arbre de la turbine de travail (112).

3. Le moteur à turbine à gaz selon la revendication n° 2, comprenant également un rotor à aubes accouplé à l'arbre de sortie (128) et dimensionné pour souffler de l'air dans et autour du générateur de gaz.

4. Le moteur à turbine à gaz selon une des revendications précédentes, sachant que l'engrenage magnétique (110) comprend:
• un ensemble stator (114) incluant une pluralité de pôles de stator (220) disposés autour d'un axe central (120),
• un ensemble rotor intérieur (112) situé radialement à l'intérieur de l'ensemble stator (114) et rotatif par rapport à l'ensemble stator (114) autour de l'axe central (120), sachant que l'ensemble rotor intérieur (112) inclut un rotor intérieur (202) et une première pluralité d'aimants permanents (210) accouplés au rotor intérieur (202), et
• un ensemble rotor extérieur (116) situé radialement à l'extérieur de l'ensemble stator (114) et rotatif par rapport à l'ensemble stator (114) autour de l'axe central (120), sachant que l'ensemble rotor extérieur (116) inclut un rotor extérieur (230) et une seconde pluralité d'aimants permanents (240) accouplés au rotor extérieur (230),
sachant que le rotor intérieur (202) de l'ensemble rotor intérieur (112) est formé de sorte à inclure une première pluralité de fentes (204) qui accueillent chacune une zone de fixation (212) d'un aimant de la première pluralité d'aimants permanents (210) accouplés au rotor intérieur (202) de sorte que la première pluralité d'aimants permanents (210) accouplés au rotor intérieur (202) est maintenue en place par rapport au rotor intérieur (202), pendant la rotation de l'ensemble rotor intérieur (112).

5. Le moteur à turbine à gaz selon la revendication n° 4, sachant que chaque aimant permanent (210, 240) accouplé aux rotors intérieur et extérieur (202, 230) inclut une portion de corps (214, 244) située à l'extérieur de la pluralité de fentes (204, 232) et disposée radialement en face de l'ensemble stator (114) sans dispositif de retenue entre ceux-ci.

6. Le moteur à turbine à gaz selon la revendication n° 4 ou n° 5, sachant qu'un revêtement magnétique abradable est appliqué sur au moins une des surfaces radialement extérieures (300) de la première pluralité d'aimants permanents (210) accouplés au rotor intérieur (202) et sur une surface radialement intérieure (306) de la seconde pluralité d'aimants permanents (240) accouplés au rotor extérieur (230).

7. Le moteur à turbine à gaz selon une des revendications n° 4 à n° 6, sachant que la zone de fixation (212, 242) de chaque aimant permanent (210, 240) accueillie dans une des fentes de la première et de la seconde pluralité de fentes (204, 232) a la forme d'un sapin, d'une queue d'hirondelle ou d'une selle.

8. Le moteur à turbine à gaz selon la revendication n° 7, sachant que chaque fente (204) formée dans le rotor intérieur (202) a une forme correspondant à la forme de la zone de fixation (212) de la première pluralité d'aimants permanents (210), accueillie dans la première pluralité de fentes (204) de sorte que la zone de fixation (212) de la première pluralité d'aimants permanents (210) s'engage dans le rotor intérieur (202).

9. Le moteur à turbine à gaz selon la revendication n° 8, sachant que chacune des fentes de la première pluralité de fentes (204), formée dans le rotor intérieur (202) de l'ensemble rotor intérieur (112) s'étend axialement à travers le rotor intérieur (202).

10. Le moteur à turbine à gaz selon une des revendications n° 4 à n° 9, sachant que la pluralité des pôles de stator (220) sont espacés et disposés circonférentiellement éloignés les uns des autres autour de l'axe central (120).

11. Le moteur à turbine à gaz selon une des revendications n° 4 à n° 10, sachant que l'ensemble stator (114) inclut également une pluralité d'enroulements (602), et que chacun des enroulements de la pluralité d'enroulements (602) est enroulé autour de chacun des pôles de la pluralité de pôles de stator (220) de sorte que l'engrenage magnétique forme un générateur.

12. Le moteur à turbine à gaz selon une des revendications n° 4 à n° 11, sachant que le rotor extérieur (230) de l'ensemble rotor extérieur (116) est formé de sorte à inclure une seconde pluralité de fentes (232) qui accueillent chacune une zone de fixation (242) d'un aimant de la seconde pluralité d'aimants permanents (240) accouplés au rotor extérieur (230) de sorte que la seconde pluralité d'aimants permanents (240) accouplés au rotor extérieur (230) est maintenue en place par rapport au rotor extérieur (230), pendant la rotation de l'ensemble rotor extérieur (116).

13. Le moteur à turbine à gaz selon la revendication n° 12, sachant que la zone de fixation (242) de chaque aimant permanent (240) accouplé au rotor extérieur (230) accueillie dans une des fentes de la seconde pluralité de fentes (232) formée dans le rotor extérieur (230) a la forme d'un sapin, d'une queue d'hirondelle ou d'une selle, et que chaque fente (232) formée dans le rotor extérieur (230) a une forme correspondant à la forme de la zone de fixation (242) de l'aimant permanent (240) accueillie dans la fente (232) de sorte que la zone de fixation (242) de la seconde pluralité d'aimants permanents (240) s'engage dans le rotor extérieur (230) pour, d'une manière générale, empêcher la seconde pluralité d'aimants permanents (240) de sortir circonférentiellement de la seconde pluralité de fentes (232) pendant la rotation du groupe rotor extérieur (116).
